# EUROPÄISCHE PATENTSCHRIFT

(11) **EP 4 214 828 B1**
(45) Veröffentlichungstag und Bekanntmachung des Hinweises auf die Patenterteilung: **28.08.2024**
(21) Anmeldenummer: 21766680.9
(22) Anmeldetag: 30.08.2021
(51) Int. Cl.: H02M 7/44, B60J 3/04, H02M 1/00

(54) **VERFAHREN ZUR ANSTEUERUNG EINER ELEKTRO-OPTISCHEN FUNKTIONSSCHICHT MITTELS EINES STEUERGERÄTES UND ANORDNUNG HIERFÜR**
METHOD FOR DRIVING AN ELECTRO-OPTICAL FUNCTIONAL LAYER BY MEANS OF A CONTROL DEVICE AND ARRANGEMENT FOR SAME
PROCÉDÉ DE COMMANDE D'UNE COUCHE FONCTIONNELLE ÉLECTRO-OPTIQUE AU MOYEN D'UN APPAREIL DE COMMANDE ET AGENCEMENT ASSOCIÉ

(30) Priorität: 15.09.2020 EP 20196193
(43) Veröffentlichungstag der Anmeldung: 26.07.2023
(73) Patentinhaber: Saint-Gobain Glass France, 92400 Courbevoie (FR)
(72) Erfinder: STELZER, Richard, 40547 Düsseldorf (DE); KLAUSS, Bastian, 47906 Kempen (DE); ZEISS, Michael, 52525 Heinsberg-Haaren (DE); CRAIG, Doane Shelby, 52134 Herzogenrath (DE)
(74) Vertreter: Weber, Sophie
(86) Internationale Anmeldenummer: PCT/EP2021/073860
(87) Internationale Veröffentlichungsnummer: WO 2022/058145

(56) Entgegenhaltungen:
- WO-A1-2020/152075
- CN-Y- 2 740 453
- DE-A1- 102010 056 203
- DE-C1- 4 205 099

## Beschreibung

Aus dem Stand der Technik - und insbesondere aus dem Fahrzeugbau - ist es bekannt elektro-optische Funktionsschichten mittels eines Steuergerätes anzusteuern.

Zur Ansteuerung werden in aller Regel Wechselspannungen verwendet, da Gleichspannungen zu einer schnelleren Alterung der elektro-optischen Funktionsschicht führen können.

Kommt es nun aber zu einer Änderung der Amplitudenspannung und/oder der Amplitudenfrequenz, so kann dies als Änderung der optischen Eigenschaften wahrgenommen werden.

Diese Änderung der optischen Eigenschaften wird jedoch als störend empfunden.

Solche Änderungen können auf vielerlei Ursachen beruhen.

Am Beispiel eines Fahrzeuges soll dies verdeutlicht werden.

Dort wird in aller Regel die niedrige Eingangsgleichspannung Vin einer Batterie, z.B. 12 V oder 24 V, mittels eines Reglers auf eine höhere alternierende Spannung Vout, z.B. 60 V (und mehr) umgesetzt. Die alternierende Spannung kann eine Wechselspannung mit oder ohne Offset sein.

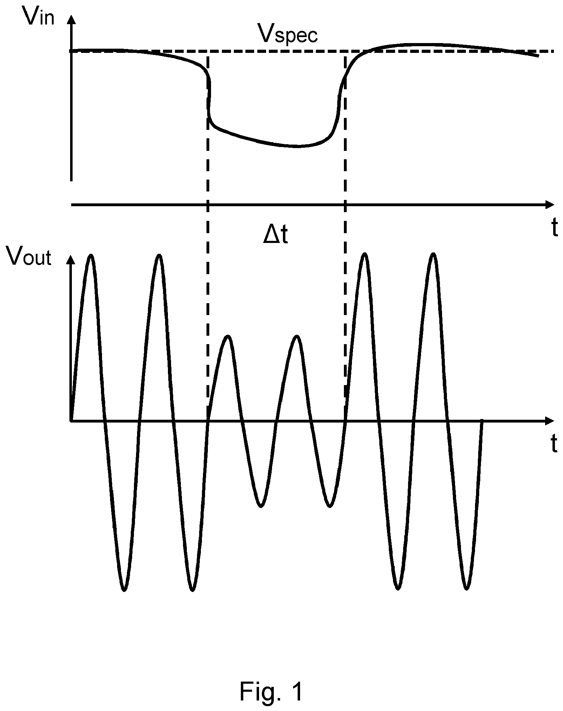

Wird nun ein großer Verbraucher zugeschaltet, so kann dies zu einem Einbruch der Eingangsgleichspannung führen. Dies ist z.B. in der Figur 1 zu sehen. Dort bricht die Eingangsgleichspannung Vin für den Zeitraum Δt ein.

Dies wird dann als Flackern / Unstetigkeit der optischen Eigenschaften wahrnehmbar, da die ausgangsseitige Wechselspannung nun nicht mehr die gewünschte Amplitude und/oder nicht mehr die gewünschte Frequenz aufweist.

Um dies zu vermeiden wurde bisher der Ansatz verfolgt die Eingangsspannung so zu puffern, dass die Zeiträume Δt eines solchen Einbruchs der Eingangsspannung überbrückt werden können.

Dieser Ansatz erfordert jedoch große Kapazitäten, die zum einen Bauraum benötigen als auch teuer sind. Zudem müssen diese Elemente für den Gebrauch erst geladen werden, sodass auch diese einen hohen (Erst-) Ladestrom benötigen.Dieses Problem ist nicht nur aus dem Fahrzeugbau, sondern auch bei Bauverglasungen bekannt.

DE 10 2010 056203 A1 offenbart ein Verfahren zum Betreiben von transparenten Flächenelementen mit einem veränderlichen Transmissionsgrad, wobei eine Quellenspannung mittels einer analogen Oszillatorschaltung eines Wandlers in eine erste Wechselspannung umgewandelt wird.

Die CN 2740453 Y scheint eine Sonnenschutzvorrichtung mit einer Flüssigkristallplatte zu offenbaren.

WO 2020/152075 A1 offenbart eine Verbundscheibenanordnung mit einem Funktionselement auf Basis von Flüssigkristallen, wobei die optischen Eigenschaften des Funktionselements und eine elektrische Widerstandsheizung einer Flächenelektrode durch zwei verschiedene Wechselspannungen gesteuert werden.

Ausgehend hiervon ist es eine Aufgabe der Erfindung Verfahren und eine Anordnung zur Durchführung des Verfahrens bereitzustellen, die bei geringen Kosten über einen definierten Zeitraum den Flackereffekt vermeidet.

Die Aufgabe wird gelöst durch ein Verfahren zur Ansteuerung einer elektro-optischen Funktionsschicht mittels eines Steuergerätes, wobei die Funktionsschicht auf einem Substrat aufgebracht ist, und wobei die elektro-optische Funktionsschicht durch Anlegen eines elektrischen Feldes in ihrer transmissiven und/oder reflektiven Eigenschaften verändert werden kann, wobei das Steuergerät einen Versorgungsspannungseingang und einen Speiseausgang sowie Spannungsmessmittel und einen Energiespeicher aufweist. Das Verfahren weist einen Schritt des Messens einer tatsächlich am Versorgungsspannungseingang zur Verfügung stehenden Spannung auf. Wenn die zur Verfügung stehende Spannung größer als ein Referenzwert ist, wird die elektro-optische Funktionsschicht mit einer Wechselspannung über den Speiseausgang angesteuert wobei der Energiespeicher zumindest abschnittsweise geladen wird. Wenn hingegen die zur Verfügung stehende Spannung kleiner oder gleich als ein Referenzwert ist, wird die elektro-optische Funktionsschicht mit einer Gleichspannung über den Speiseausgang angesteuert, wobei zumindest ein Teil der Energie für die Ansteuerung aus dem Energiespeicher bezogen wird, wobei die Gleichspannung kleiner als der Spitzenwert der Wechselspannung ist.

Hierdurch wird vorteilhaft der Flackereffekt vermieden, da nunmehr eine Gleichspannung an der elektro-optischen Funktionsschicht anliegt. Die Zeiträume, in denen dies stattfindet, sind dabei vergleichsweise klein, sodass der Lebensdauerverlust auf die Gesamtlebensdauer gering ist. Da bei einer Gleichspannung die elektro-optische Schicht nicht umgeladen werden muss, kann der Energiespeicher klein dimensioniert sein, da er nun nicht mehr über einen zu erwartenden Zeitraum Δt puffern muss, sondern nur so viel Energie speichern muss, dass die gewünschte Gleichspannung in der elektro-optischen Funktionsschicht erreicht wird. Anschließend stellt die elektro-optische Funktionsschicht ebenfalls einen Energiespeicher dar.

In einer Ausführungsform der Erfindung ist der Referenzwert ein vorbestimmter Wert, der mindestens um die Hälfte kleiner ist als eine spezifizierte Spannung, z.B. die spezifizierte Spannung eines Bordnetzes.

D.h., die Erfindung lässt sich auf verschiedene Szenarien an Spannungsstörungen und Spannungsquellen anpassen.

In einer weiteren Ausführungsform der Erfindung beträgt die Frequenz der Wechselspannung bevorzugt 25 Hz oder mehr. Mit anderen Worten, die Frequenz kann größer gleich 25 Hz betragen.

D.h., durch Wahl einer Frequenz die höher ist als das Wahrnehmungsvermögen des (menschlichen) Auges, wird ein Flackereffekt verhindert.

In einer weiteren Ausführungsform der Erfindung beträgt die Frequenz der Wechselspannung bevorzugt 100 Hz oder geringer, d.h. die Frequenz kann kleiner oder gleich 100 Hz betragen.

Durch die Wahl einer niedrigen Frequenz wird der Energiebedarf vermindert, da mit zunehmender Frequenz das Umladen energieaufwändiger wird. Hierdurch kann das Verfahren auch im ungestörten Fall effizient arbeiten.

In einer weiteren Ausführungsform der Erfindung benötigt der Schritt des Messens weniger als eine Halbperiode der Wechselspannung.

D.h. wird innerhalb der Halbperiode erkannt, dass die Eingangsspannung einbricht, kann das Verfahren umgehend auf Gleichspannung wechseln und so den Energiespeicher klein halten.

In einer weiteren Ausführungsform der Erfindung ermöglicht der Energiespeicher im geladenen Zustand die Ansteuerung der elektro-optischen Funktionsschicht über einen Zeitraum von 0,25 Sekunden oder mehr.

Gemäß einer Ausführungsform der Erfindung ermöglicht der Energiespeicher im geladenen Zustand die Ansteuerung der elektro-optischen Funktionsschicht über einen Zeitraum von 1 Sekunde oder weniger.

D.h. typische Spannungsschwankungen können hierdurch ohne weiteres ausgeglichen werden.

Die Aufgabe wird auch gelöst durch eine Anordnung zur Durchführung eines der erfindungsgemäßen Verfahren. Dabei weist die Anordnung ein Substrat, eine elektro-optische Funktionsschicht, und ein Steuergerät auf, wobei die Funktionsschicht auf dem Substrat aufgebracht ist, wobei die elektro-optische Funktionsschicht durch Anlegen eines elektrischen Feldes in ihren transmissiven und/oder reflektiven Eigenschaften verändert werden kann, wobei das Steuergerät einen Versorgungsspannungseingang und einen Speiseausgang sowie Spannungsmessmittel und einen Energiespeicher aufweist, wobei die Spannungsmessmittel eingerichtet sind zum Messen einer tatsächlich am Versorgungsspannungseingang zur Verfügung stehenden Spannung, wobei, wenn die zur Verfügung stehende Spannung größer als ein Referenzwert ist, das Steuergerät eingerichtet ist zum Ansteuern der elektro-optischen Funktionsschicht mit einer Wechselspannung über den Speiseausgang, wobei der Energiespeicher zumindest abschnittsweise geladen wird, wobei, wenn die zur Verfügung stehende Spannung kleiner oder gleich als ein Referenzwert ist, das Steuergerät eingerichtet ist zum Ansteuern der elektro-optischen Funktionsschicht mit einer Gleichspannung über den Speiseausgang, wobei zumindest ein Teil der Energie für die Ansteuerung aus dem Energiespeicher bezogen wird, wobei die Gleichspannung kleiner als der Spitzenwert der Wechselspannung ist.

Hierdurch wird vorteilhaft der Flackereffekt vermieden, da nunmehr eine Gleichspannung an der elektro-optischen Funktionsschicht anliegt. Die Zeiträume, in denen dies stattfindet, sind dabei vergleichsweise klein, sodass der Lebensdauerverlust auf die Gesamtlebensdauer gering ist. Da bei einer Gleichspannung die elektro-optische Schicht nicht umgeladen werden muss, kann der Energiespeicher klein dimensioniert sein, da er nun nicht mehr über einen zu erwartenden Zeitraum Δt puffern muss, sondern nur so viel Energie speichern muss, dass die gewünschte Gleichspannung in der elektro-optischen Funktionsschicht erreicht wird. Anschließend stellt die elektro-optische Funktionsschicht ebenfalls einen Energiespeicher dar.

In einer Ausführungsform der Erfindung ist der Referenzwert ein vorbestimmter Wert, der mindestens um die Hälfte kleiner ist als eine spezifizierte Spannung, z.B. die spezifizierte Spannung eines Bordnetzes.

D.h., die Erfindung lässt sich auf verschiedene Szenarien an Spannungsstörungen und Spannungsquellen anpassen.

In einer Ausführungsführung der Erfindung beträgt die Frequenz der Wechselspannung bevorzugt 25 Hz oder mehr. Die Frequenz der Wechselspannung kann größer oder gleich 25 Hz betragen.

D.h., durch Wahl einer Frequenz die höher ist als das Wahrnehmungsvermögen des (menschlichen) Auges, wird ein Flackereffekt verhindert.

In einer weiteren Ausführungsform der Erfindung beträgt die Frequenz der Wechselspannung bevorzugt 100 Hz oder geringer. Die Frequenz der Wechselspannung kann also kleiner oder gleich 100 Hz betragen.

Durch die Wahl einer niedrigen Frequenz wird der Energiebedarf vermindert, da mit zunehmender Frequenz das Umladen energieaufwändiger wird. Hierdurch kann das Verfahren auch im ungestörten Fall effizient arbeiten.

D.h. wird innerhalb der Halbperiode erkannt, dass die Eingangsspannung einbricht, kann das Verfahren umgehend auf Gleichspannung wechseln und so den Energiespeicher klein halten.

In einer weiteren Ausführungsform der Erfindung ermöglicht der Energiespeicher im geladenen Zustand die Ansteuerung der elektro-optischen Funktionsschicht über einen Zeitraum von 0,25 Sekunden oder mehr.

Gemäß einer Ausführungsform der Erfindung ermöglicht der Energiespeicher im geladenen Zustand die Ansteuerung der elektro-optischen Funktionsschicht über einen Zeitraum von 1 Sekunde oder weniger.

D.h. typische Spannungsschwankungen können hierdurch ohne weiteres ausgeglichen werden.

In einer Ausführungsform der Erfindung ist die elektro-optische Funktionsschicht ausgewählt aus einer Gruppe aufweisend Polymer Dispersed Liquid Crystal (PDLC), Suspended Particle Devices (SPD), Flüssig-Kristall, oder Electrochrom. D.h., die Erfindung kann mit allen gängigen elektro-optischen Funktionsschichten verwendet werden.

In einer Ausführungsform der Erfindung ist das Steuergerät ein Steuergerät zur Ansteuerung einer elektro-optischen Funktionsschicht. D.h., die Ansteuerung kann vorteilhaft in bestehende Systeme integriert werden. Sofern die notwendigen Einrichtungen vorhanden sind, kann die Erfindung auch als Softwareupdate bereitgestellt werden.

Gemäß einer weiteren Ausführungsform der Erfindung ist das Substrat ausgewählt aus einer Gruppe aufweisend Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Damit kann die Erfindung in allen Bereichen der Fahrzeugverglasung als auch in allen Bereichen der Bauverglasung Verwendung finden.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine schematische Gegenüberstellung einer Eingangsspannung und eines möglichen Ausgangsspannungsverlaufes gemäß dem Stand der Technik,
- Fig. 2: eine schematische Gegenüberstellung einer Eingangsspannung und eines möglichen Ausgangsspannungsverlaufes gemäß Ausführungsformen der Erfindung,
- Fig. 3: eine schematische Darstellung von Einheiten gemäß Ausführungsformen der Erfindung, und
- Fig. 4: ein beispielhaftes Flussdiagramm gemäß Ausführungsformen der Erfindung.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/- 1 % bis zu +/- 10 %.

Soweit in dieser Anmeldung Normen, Spezifikationen oder dergleichen benannt werden, werden zumindest immer die am Anmeldetag anwendbaren Normen, Spezifikationen oder dergleichen in Bezug genommen. D.h. wird eine Norm / Spezifikation etc. aktualisiert oder durch einen Nachfolger ersetzt, so ist die Erfindung auch hierauf anwendbar.

In den Figuren sind verschiedene Ausführungsformen dargestellt.

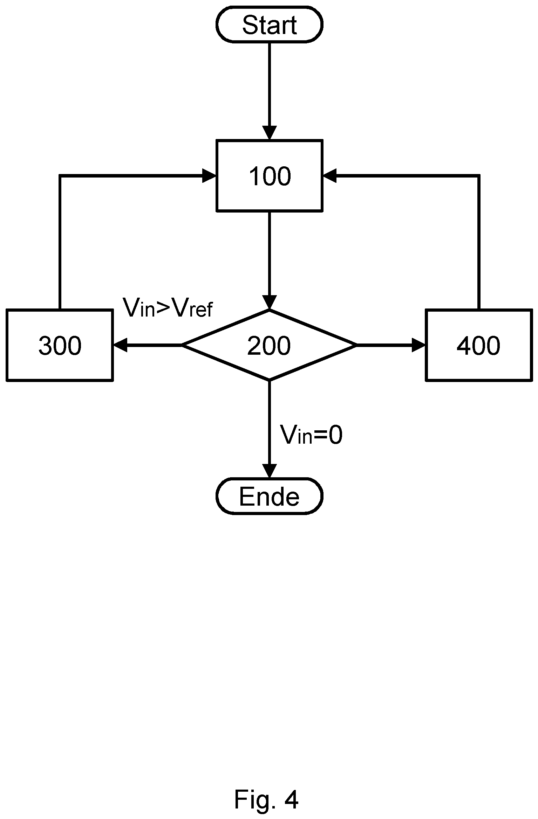

Nachfolgend wird ein erfindungsgemäßes Verfahren zur Ansteuerung einer elektro-optischen Funktionsschicht FS1 mittels eines Steuergerätes ECU (sogenannte "Electronic Control Unit") unter Hinweis auf Figur 4 dargestellt werden.

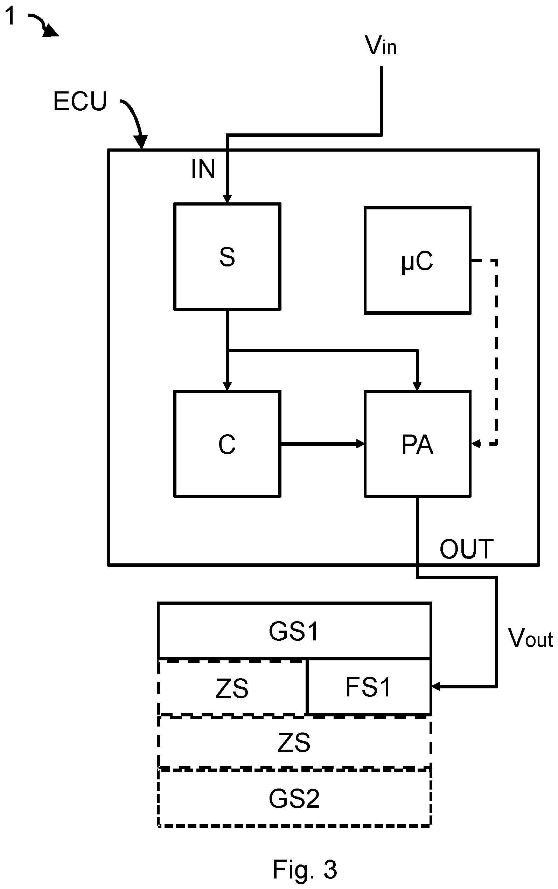

In dem erfindungsgemäßen Verfahren bzw. der erfindungsgemäßen Anordnung gemäß Figur 3 ist die Funktionsschicht FS1 auf einem Substrat GS1 aufgebracht. Durch Anlegen eines elektrischen Feldes an die elektro-optische Funktionsschicht FS1 kann die elektro-optische Funktionsschicht FS1 in ihrer transmissiven und/oder reflektiven Eigenschaften verändert werden. Das Steuergerät ECU weist zumindest einen Versorgungsspannungseingang IN und einen Speiseausgang OUT, sowie Spannungsmessmittel S und einen Energiespeicher C auf.

Das erfindungsgemäße Verfahren weist einen Schritt des Messens 100 einer tatsächlich am Versorgungsspannungseingang IN zur Verfügung stehenden Spannung Vin auf. Die am Versorgungsspannungseingang IN zur Verfügung stehende Spannung kann z.B. eine Gleichspannung oder eine Wechselspannung sein. Typische Spannungen sind 12 V Gleichspannung oder 24 V Gleichspannung oder 48 V Gleichspannung, wie sie in Bordnetzen von Fahrzeugen anzutreffen sind.

Das erfindungsgemäße Verfahren vergleicht nun in einem Schritt 200 die zur Verfügung stehende Spannung Vin mit einem Referenzwert Vref. Der Referenzwert kann z.B. abhängig sein von einem vorgewählten Zielwert der Ausgangsspannung, um z.B. eine vorbestimmte Transmission und/oder Reflektion bereitzustellen. D.h. der Referenzwert kann variieren.

Wenn in Schritt 200 die zur Verfügung stehende Spannung Vin größer ist als ein Referenzwert Vref kann die elektro-optische Funktionsschicht FS1 mit einer Wechselspannung VAC über den Speiseausgang OUT in Schritt 300 angesteuert werden, wobei der Energiespeicher C zumindest abschnittsweise geladen wird. D.h. im Zeitraum normalen Betriebs wird der kleine Energiespeicher C im Wesentlichen geladen gehalten, sodass im Störungsfall genügend Energie zur Verfügung steht.

Wenn jedoch in Schritt 200 die zur Verfügung stehende Spannung Vin kleiner oder gleich als ein Referenzwert Vref ist, kann die elektro-optische Funktionsschicht FS1 mit einer Gleichspannung VDC über den Speiseausgang OUT in Schritt 400 angesteuert werden, wobei nunmehr zumindest ein Teil der Energie oder auch die gesamte Energie für die Ansteuerung aus dem Energiespeicher C bezogen wird. D.h. im Zeitraum des Störungsfalls wird - je nach Ladezustand der elektro-optischen Funktionsschicht FS1 - noch Energie benötigt, um die elektro-optische Funktionsschicht FS1 auf einen Zielwert im Gleichspannungsbetreib zu laden.

Die Gleichspannung VDC ist dabei kleiner als der Spitzenwert der Wechselspannung VAC. In aller Regel wird der Wert der Gleichspannung zwischen 50 % und 80 % des Spitzenwertes der Wechselspannung VAC, insbesondere 65 % bis 75 % des Spitzenwertes der Wechselspannung VAC betragen. Der Wert kann empirisch ermittelt sein und beispielsweise als einfache Rechenvorschrift oder als Look-Up-Table in dem Steuergerät hinterlegt sein.

Die Erfindung stellt auch eine Anordnung zur Durchführung eines der erfindungsgemäßen Verfahren bereit. Dabei weist die Anordnung - wie in Figur 3 dargestellt - ein Substrat GS1, eine elektro-optische Funktionsschicht FS1, ein Steuergerät ECU auf. Die Funktionsschicht FS1 ist auf dem Substrat GS1 aufgebracht. Die elektro-optische Funktionsschicht FS1 kann durch Anlegen eines elektrischen Feldes bzw. einer Spannung in ihren transmissiven und/oder reflektiven Eigenschaften verändert werden. Mit anderen Worten, ist die Funktionsschicht FS1 durch Anlegen eines elektrischen Feldes bzw. einer Spannung in ihren transmissiven und/oder reflektiven Eigenschaften veränderbar. Das Steuergerät ECU weist einen Versorgungsspannungseingang IN und einen Speiseausgang OUT sowie Spannungsmessmittel S und einen Energiespeicher C auf, wobei die Spannungsmessmittel S eingerichtet sind zum Messen 100 einer tatsächlich am Versorgungsspannungseingang IN zur Verfügung stehenden Spannung Vin. Wenn in Schritt 200 die zur Verfügung stehende Spannung Vin größer als ein Referenzwert Vref ist, ist das Steuergerät ECU eingerichtet zum Ansteuern 300 der elektro-optischen Funktionsschicht FS1 mit einer Wechselspannung VAC über den Speiseausgang OUT, wobei der Energiespeicher C zumindest abschnittsweise geladen wird. Wenn in Schritt 200 die zur Verfügung stehende Spannung Vin kleiner oder gleich als ein Referenzwert Vref ist, ist das Steuergerät ECU eingerichtet zum Ansteuern 400 der elektro-optischen Funktionsschicht FS1 mit einer Gleichspannung VDC über den Speiseausgang OUT, wobei zumindest ein Teil der Energie für die Ansteuerung aus dem Energiespeicher C bezogen wird, wobei die Gleichspannung VDC kleiner als der Spitzenwert der Wechselspannung VAC ist.

Hierdurch wird vorteilhaft der Flackereffekt vermieden, da nunmehr eine Gleichspannung an der elektro-optischen Funktionsschicht anliegt. Die Zeiträume, in denen dies stattfindet, sind dabei vergleichsweise klein, sodass der Lebensdauerverlust auf die Gesamtlebensdauer gering ist. Da bei einer Gleichspannung die elektro-optische Schicht nicht umgeladen werden muss, kann der Energiespeicher klein dimensioniert sein, da er nun nicht mehr über einen zu erwartenden Zeitraum Δt puffern muss, sondern nur so viel Energie speichern muss, dass die gewünschte Gleichspannung in der elektro-optischen Funktionsschicht erreicht wird. Anschließend stellt die elektro-optische Funktionsschicht ebenfalls einen Energiespeicher dar.

Dabei macht sich die Erfindung zu Nutze, dass eine elektro-optische Funktionsschicht FS1 überwiegend wie ein Kondensator wirkt, sodass der Kondensator nur geladen werden muss. Im theoretischen Fall eines idealen Kondensators würde bei einer anliegenden Gleichspannung die Spannung am Kondensator / der elektro-optischen Funktionsschicht FS1 asymptotisch gegen die anliegende Gleichspannung streben und der Strom immer weiter abnehmen. Praktisch sinkt der Strom schnell auf vernachlässigbare Werte ab.

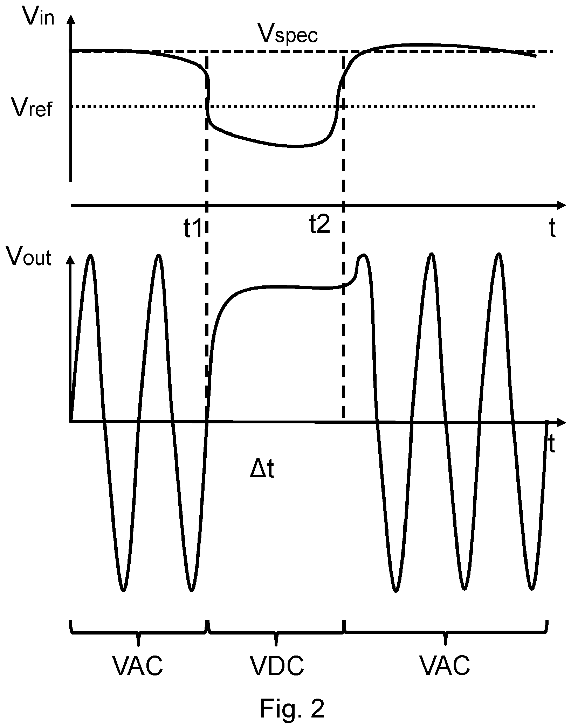

Entsprechender Weise unterscheidet sich nunmehr das Verhalten gegenüber Figur 1 wie in Figur 2 dargestellt. Nachdem in einer Phase des normalen Betriebs die elektro-optische Funktionsschicht FS1 mit einer Wechselspannung VAC über den Speiseausgang OUT versorgt wird (gemäß Schritt 300), wird zu einem Zeitpunkt t1 in einem Schritt 200 erkannt, dass die Eingangsspannung Vin unter den Referenzwert Vref fällt. Nunmehr wird die elektro-optische Funktionsschicht FS1 mit einer Gleichspannung VDV über den Speiseausgang OUT versorgt (gemäß Schritt 400). Wird zu einem späteren Zeitpunkt t2 die Rückkehr der Eingangsspannung Vin über den Referenzwert Vref erkannt (erneut in Schritt 200), so wird erneut die elektro-optische Funktionsschicht FS1 mit einer Wechselspannung VAC über den Speiseausgang OUT versorgt werden (gemäß Schritt 300). Im Falle, dass gar keine Spannung mehr anliegt, d.h. die Eingangsspannung Vin= 0 Volt beträgt, kann das Verfahren optional enden.

In einer Ausführungsform der Erfindung ist der Referenzwert Vref bei dem die Umschaltung von Wechselspannungsbetrieb auf Gleichspannungsbetrieb erfolgt, mindestens um die Hälfte kleiner als die spezifizierte Spannung Vspec. D.h. ist die spezifizierte Spannung Vspec z.B. 12 V, so ist der Referenzwert Vref z.B. 6 Volt oder kleiner, z.B. 5 Volt. Dieser Referenzwert Vref kann z.B. abhängig von einem gegenwärtigen Zielwert der Wechselspannung sein.

D.h., die Erfindung lässt sich auf verschiedene Szenarien an Spannungsstörungen und Spannungsquellen anpassen.

In einer weiteren Ausführungsform der Erfindung beträgt die Frequenz der Wechselspannung bevorzugt 25 Hz oder mehr.

D.h., durch Wahl einer Frequenz die höher ist als das Wahrnehmungsvermögen des (menschlichen) Auges, wird ein Flackereffekt verhindert.

In einer weiteren Ausführungsform der Erfindung beträgt die Frequenz der Wechselspannung bevorzugt 100 Hz oder geringer.

Durch Wahl einer niedrigen Frequenz wird der Energiebedarf vermindert, da mit zunehmender Frequenz das Umladen der elektro-optischen Funktionsschicht FS1 energieaufwändiger wird. Hierdurch kann das Verfahren auch im ungestörten Fall effizient arbeiten.

In einer weiteren Ausführungsform der Erfindung benötigt der Schritt des Messens 100 weniger als eine Halbperiode der Wechselspannung.

D.h. wird innerhalb der Halbperiode erkannt, dass die Eingangsspannung Vin einbricht, kann das Verfahren umgehend auf Gleichspannung VDC wechseln und so den Energiespeicher C klein halten.

In einer weiteren Ausführungsform der Erfindung ermöglicht der Energiespeicher C im geladenen Zustand die Ansteuerung der elektro-optischen Funktionsschicht FS1 über einen Zeitraum von 0,25 Sekunden oder mehr.

Gemäß einer Ausführungsform der Erfindung ermöglicht der Energiespeicher C im geladenen Zustand die Ansteuerung der elektro-optischen Funktionsschicht FS1 über einen Zeitraum von 1 Sekunde oder weniger.

D.h. typische Spannungsschwankungen, wie sie z.B. beim Einschalten von leistungshungrigen Verbrauchern entstehen können, können hierdurch ohne weiteres ausgeglichen werden.

In einer Ausführungsform der Erfindung ist die elektro-optische Funktionsschicht FS1 ausgewählt aus einer Gruppe aufweisend Polymer Dispersed Liquid Crystal (PDLC), suspended particle devices (SPD), Flüssig-Kristall, oder Electrochrom.

D.h., die Erfindung kann mit allen gängigen elektro-optischen Funktionsschichten verwendet werden.

In einer Ausführungsform der Erfindung ist das Steuergerät ECU ein Steuergerät zur Ansteuerung einer elektro-optische Funktionsschicht. Das Steuergerät ECU weist z.B. (interne) Spannungsmessmittel S und einen Microcontroller µC auf. Der Energiespeicher C kann - wie dargestellt intern im Steuergerät ECU und/oder extern am Steuergerät realisiert sein. Der Microcontroller µC kann die erfindungsgemäßen Verfahren ausführen. Diese können in einem statischen oder veränderlichen Speicher abgelegt sein und auf dem Microcontroller µC ausgeführt werden. Hierzu kann der Microcontroller µC z.B. Daten von dem Spannungsmessmittel S erhalten oder abfragen. Unter Einfluss des Microcontroller µC a kann eine Treiberstufe PA angesteuert werden, um eine Gleichspannung VDC oder eine Wechselspannung VAC am Speiseausgang OUT bereitzustellen.

Gemäß einer weiteren Ausführungsform der Erfindung ist das Substrat GS1 ausgewählt aus einer Gruppe aufweisend Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Damit kann die Erfindung in allen Bereichen der Fahrzeugverglasung als auch in allen Bereichen der Bauverglasung Verwendung finden.

Ein Beispiel einer Verbundscheibe weist das Substrat GS1 und die elektro-optische Funktionsschicht FS1 auf, wobei das Substrat GS1 über zumindest eine Zwischenschicht ZS mit einem weiteren Substrat GS2 verbunden ist. Eine Zwischenschicht kann zumindest ein Material ausgewählt aus der Gruppe aufweisend Polyimid, Polyurethan, Polymethylenmetacrylsäure, Polykarbonat, Polyethylenterephthalat, Polyvinylbutyral, FR6, Acrylnitril-butadien-Styrol- Copolymerisat, Polyethylen, Polypropylen, Polyvinylchlorid, Polystyrol, Polybutylenterephthalat, Polyamid aufweisen. Ebenso kann zwischen dem Substrat GS1 und der elektro-optische Funktionsschicht FS1 eine (nicht dargestellte) Zwischenschicht angeordnet sein.

Die Erfindung ermöglicht es daher insbesondere auch unter Bedingungen eines temporären Spannungseinbruchs einen flackerfreien Betrieb zur Verfügung zu stellen, wobei anders als im Stand der Technik auf größere Puffer nunmehr verzichtet werden kann.

### Bezugszeichenliste

- 1: Anordnung
- µC: Microcontroller
- Vin: Eingangsspannung
- Vout: Ausgangsspannung
- GS1: Substrat
- GS2: Substrat
- ZS: Zwischenschicht
- FS1: elektro-optische Funktionsschicht
- ECU: Steuergerät
- IN: Versorgungsspannungseingang
- OUT: Speiseausgang
- S: Spannungsmessmittel
- C: Energiespeicher
- Vin: zur Verfügung stehende Spannung
- PA: Treiberstufe

### Verfahrensschritte

100 Messen einer tatsächlich am Versorgungsspannungseingang (IN) zur Verfügung stehenden Spannung (Vin),
200 Vergleichen der zur Verfügung stehenden Spannung (Vin) mit einem Referenzwert (Vref)
300 Ansteuern der elektro-optischen Funktionsschicht (FS1) mit einer Wechselspannung (VAC) über den Speiseausgang (OUT), wobei der Energiespeicher (C) zumindest abschnittsweise geladen wird,
400 Ansteuern der elektro-optischen Funktionsschicht (FS1) mit einer Gleichspannung (VDC) über den Speiseausgang (OUT), wobei zumindest ein Teil der Energie für die Ansteuerung aus dem Energiespeicher (C) bezogen wird

## Patentansprüche

1. Verfahren zur Ansteuerung einer elektro-optischen Funktionsschicht (FS1) mittels eines Steuergerätes (ECU), wobei die Funktionsschicht auf einem Substrat (GS1) aufgebracht ist, und wobei die elektro-optische Funktionsschicht (FS1) durch Anlegen eines elektrischen Feldes in ihren transmissiven und/oder reflektiven Eigenschaften verändert werden kann, wobei das Steuergerät (ECU) einen Versorgungsspannungseingang (IN) und einen Speiseausgang (OUT) sowie Spannungsmessmittel (S) und einen Energiespeicher (C) aufweist, aufweisend die Schritte:
• Messen (100) einer tatsächlich am Versorgungsspannungseingang (IN) zur Verfügung stehenden Spannung (Vin),
• wenn (200) die zur Verfügung stehende Spannung (Vin) größer als ein Referenzwert (Vref) ist, ansteuern (300) der elektro-optischen Funktionsschicht (FS1) mit einer Wechselspannung (VAC) über den Speiseausgang (OUT), wobei der Energiespeicher (C) zumindest abschnittsweise geladen wird,
• wenn (200) die zur Verfügung stehende Spannung (Vin) kleiner oder gleich als ein Referenzwert (Vref) ist, ansteuern (400) der elektro-optischen Funktionsschicht (FS1) mit einer Gleichspannung (VDC) über den Speiseausgang (OUT), wobei zumindest ein Teil der Energie für die Ansteuerung aus dem Energiespeicher (C) bezogen wird,
• wobei die Gleichspannung (VDC) kleiner als der Spitzenwert der Wechselspannung (VAC) ist.

2. Verfahren nach Anspruch 1, **dadurch gekennzeichnet, dass** der Referenzwert (Vref) mindestens um die Hälfte kleiner ist als eine spezifizierte Spannung (Vspec).

3. Verfahren nach Anspruch 1 oder 2, **dadurch gekennzeichnet, dass** die Frequenz der Wechselspannung größer oder gleich 25 Hz beträgt.

4. Verfahren nach einem der vorhergehenden Ansprüche, **dadurch gekennzeichnet, dass** die Frequenz der Wechselspannung kleiner oder gleich 100 Hz beträgt.

5. Verfahren nach einem der vorhergehenden Ansprüche, **dadurch gekennzeichnet, dass** der Schritt des Messens (100) weniger als eine Halbperiode der Wechselspannung benötigt.

6. Verfahren nach einem der vorhergehenden Ansprüche, **dadurch gekennzeichnet, dass** der Energiespeicher (C) im geladenen Zustand die Ansteuerung der elektro-optischen Funktionsschicht (FS1) über einen Zeitraum von 0,25 Sekunden oder mehr ermöglicht.

7. Verfahren nach einem der vorhergehenden Ansprüche, **dadurch gekennzeichnet, dass** der Energiespeicher (C) im geladenen Zustand die Ansteuerung der elektro-optischen Funktionsschicht (FS1) über einen Zeitraum von 1 Sekunde oder weniger ermöglicht.

8. Anordnung (1) aufweisend:
• ein Substrat (GS1),
• eine elektro-optische Funktionsschicht (FS1),
• ein Steuergerät (ECU),
• wobei die Funktionsschicht (FS1) auf dem Substrat (GS1) aufgebracht ist, und wobei die elektro-optische Funktionsschicht (FS1) durch Anlegen eines elektrischen Feldes in ihren transmissiven und/oder reflektiven Eigenschaften verändert werden kann,
• wobei das Steuergerät (ECU) einen Versorgungsspannungseingang (IN) und einen Speiseausgang (OUT) sowie Spannungsmessmittel (S) und einen Energiespeicher (C) aufweist,
• wobei die Spannungsmessmittel (S) eingerichtet sind zum Messen (100) einer tatsächlich am Versorgungsspannungseingang (IN) zur Verfügung stehenden Spannung (Vin),
• wobei, wenn (200) die zur Verfügung stehende Spannung (Vin) größer als ein Referenzwert (Vref) ist, das Steuergerät (ECU) eingerichtet ist zum Ansteuern (300) der elektro-optischen Funktionsschicht (FS1) mit einer Wechselspannung (VAC) über den Speiseausgang (OUT), wobei der Energiespeicher (C) zumindest abschnittsweise geladen wird,
• wobei, wenn (200) die zur Verfügung stehende Spannung (Vin) kleiner oder gleich als ein Referenzwert (Vref) ist, das Steuergerät (ECU) eingerichtet ist zum Ansteuern (400) der elektro-optischen Funktionsschicht (FS1) mit einer Gleichspannung (VDC) über den Speiseausgang (OUT), wobei zumindest ein Teil der Energie für die Ansteuerung aus dem Energiespeicher (C) bezogen wird,
• wobei die Gleichspannung (VDC) kleiner als der Spitzenwert der Wechselspannung (VAC) ist.

9. Anordnung nach Anspruch 8, **dadurch gekennzeichnet, dass** der vorbestimmte Wert (Vref) mindestens um die Hälfte kleiner ist als eine spezifizierte Spannung (Vin).

10. Anordnung nach Anspruch 8 oder 9, **dadurch gekennzeichnet, dass** die Frequenz der Wechselspannung größer oder gleich 25 Hz beträgt.

11. Anordnung nach einem der vorhergehenden Ansprüche 8 bis 10, **dadurch gekennzeichnet, dass** die Frequenz der Wechselspannung kleiner oder gleich 100 Hz beträgt.

12. Anordnung nach einem der vorhergehenden Ansprüche 8 bis 11, **dadurch gekennzeichnet, dass** die Spannungsmessmittel (S) zum Messens (100) weniger als eine Halbperiode der Wechselspannung benötigen.

13. Anordnung nach einem der vorhergehenden Ansprüche 8 bis 12, **dadurch gekennzeichnet, dass** der Energiespeicher (C) im geladenen Zustand die Ansteuerung der elektro-optischen Funktionsschicht (FS1) über einen Zeitraum von 0,25 Sekunden oder mehr ermöglicht.

14. Anordnung nach einem der vorhergehenden Ansprüche 8 bis 13, **dadurch gekennzeichnet, dass** der Energiespeicher (C) im geladenen Zustand die Ansteuerung der elektro-optischen Funktionsschicht (FS1) über einen Zeitraum von 1 Sekunde oder weniger ermöglicht.

## Claims

1. Method for controlling an electro-optical functional layer (FS1) by means of a control unit (ECU), wherein the functional layer is applied to a substrate (GS1), and wherein the transmissive and/or reflective properties of the electro-optical functional layer (FS1) can be changed by applying an electric field, wherein the control unit (ECU) comprises a supply voltage input (IN) and a feed output (OUT), as well as voltage measuring means (S) and an energy storage device (C), comprising the steps of:
• measuring (100) a voltage (Vin) actually available at the supply voltage input (IN),
• if (200) the available voltage (Vin) is greater than a reference value (Vref), controlling (300) the electro-optical functional layer (FS1) by means of an alternating voltage (VAC) via the feed output (OUT), wherein the energy storage device (C) is charged at least in portions,
• if (200) the available voltage (Vin) is less than or equal to a reference value (Vref), controlling (400) the electro-optical functional layer (FS1) by means of a direct voltage (VDC) via the feed output (OUT), wherein at least part of the energy for the control is obtained from the energy storage device (C),
• wherein the direct voltage (VDC) is less than the peak value of the alternating voltage (VAC).

2. Method according to claim 1, **characterized in that** the reference value (Vref) is less than a specified voltage (Vspec) by at least half.

3. Method according to either claim 1 or claim 2, **characterized in that** the frequency of the alternating voltage is greater than or equal to 25 Hz.

4. Method according to any of the preceding claims, **characterized in that** the frequency of the alternating voltage is less than or equal to 100 Hz.

5. Method according to any of the preceding claims, **characterized in that** the step of measuring (100) requires less than a half period of the alternating voltage.

6. Method according to any of the preceding claims, **characterized in that** the energy storage device (C), in the charged state, enables the control of the electro-optical functional layer (FS1) over a period of 0.25 seconds or more.

7. Method according to any of the preceding claims, **characterized in that** the energy storage device (C), in the charged state, enables the control of the electro-optical functional layer (FS1) over a period of 1 second or less.

8. Assembly (1) comprising:
• a substrate (GS1),
• an electro-optical functional layer (FS1),
• a control unit (ECU),
• wherein the functional layer (FS1) is deposited on the substrate (GS1), and wherein the transmissive and/or reflective properties of the electro-optical functional layer (FS1) can be changed by applying an electric field,
• wherein the control unit (ECU) comprises a supply voltage input (IN) and a feed output (OUT), as well as voltage measuring means (S) and an energy storage device (C),
• wherein the voltage measuring means (S) are designed to measure (100) a voltage (Vin) actually available at the supply voltage input (IN),
• wherein, if (200) the available voltage (Vin) is greater than a reference value (Vref), the control unit (ECU) is designed to control (300) the electro-optical functional layer (FS1) by means of an alternating voltage (VAC) via the feed output (OUT), wherein the energy storage device (C) is charged at least in portions,
• wherein, if (200) the available voltage (Vin) is less than or equal to a reference value (Vref), the control unit (ECU) is designed to control (400) the electro-optical functional layer (FS1) by means of a direct voltage (VDC) via the feed output (OUT), wherein at least part of the energy for the control is obtained from the energy storage device (C),
• wherein the direct voltage (VDC) is less than the peak value of the alternating voltage (VAC).

9. Assembly according to claim 8, **characterized in that** the predetermined value (Vref) is less than a specified voltage (Vin) by at least half.

10. Assembly according to either claim 8 or claim 9, **characterized in that** the frequency of the alternating voltage is greater than or equal to 25 Hz.

11. Assembly according to any of the preceding claims 8 to 10, **characterized in that** the frequency of the alternating voltage is less than or equal to 100 Hz.

12. Assembly according to any of the preceding claims 8 to 11, **characterized in that** the voltage measuring means (S) require less than a half period of the alternating voltage for measuring (100).

13. Assembly according to any of the preceding claims 8 to 12, **characterized in that** the energy storage device (C), in the charged state, enables the control of the electro-optical functional layer (FS1) over a period of 0.25 seconds or more.

14. Assembly according to any of the preceding claims 8 to 13, **characterized in that** the energy storage device (C), in the charged state, enables the control of the electro-optical functional layer (FS1) over a period of 1 second or less.

## Revendications

1. Procédé permettant l'activation d'une couche fonctionnelle (FS1) électro-optique au moyen d'un appareil de commande (ECU), dans lequel la couche fonctionnelle est appliquée sur un substrat (GS1), et dans lequel les propriétés de transmission et/ou de réflexion de la couche fonctionnelle (FS1) électro-optique peuvent être modifiées par l'application d'un champ électrique, dans lequel l'appareil de commande (ECU) présente une entrée de tension d'alimentation (IN) et une sortie d'approvisionnement (OUT) ainsi que des moyens de mesure de tension (S) et un accumulateur d'énergie (C), présentant les étapes consistant à :
• mesurer (100) une tension (Vin) réellement disponible à l'entrée de tension d'alimentation (IN),
• lorsque (200) la tension (Vin) disponible est supérieure à une valeur de référence (Vref), activer (300) la couche fonctionnelle (FS1) électro-optique avec une tension alternative (VAC) par l'intermédiaire de la sortie d'approvisionnement (OUT), dans lequel l'accumulateur d'énergie (C) est chargé au moins par sections,
• lorsque (200) la tension (Vin) disponible est inférieure ou égale à une valeur de référence (Vref), activer (400) la couche fonctionnelle (FS1) électro-optique avec une tension continue (VDC) par l'intermédiaire de la sortie d'approvisionnement (OUT), dans lequel au moins une partie de l'énergie pour l'activation provient de l'accumulateur d'énergie (C),
• dans lequel la tension continue (VDC) est inférieure à la valeur de crête de la tension alternative (VAC).

2. Procédé selon la revendication 1, **caractérisé en ce que** la valeur de référence (Vref) est inférieure au moins de moitié à une tension spécifiée (Vspec).

3. Procédé selon la revendication 1 ou 2, **caractérisé en ce que** la fréquence de la tension alternative est supérieure ou égale à 25 Hz.

4. Procédé selon l'une des revendications précédentes, **caractérisé en ce que** la fréquence de la tension alternative est inférieure ou égale à 100 Hz.

5. Procédé selon l'une des revendications précédentes, **caractérisé en ce que** l'étape de mesure (100) nécessite moins d'une demi-période de la tension alternative.

6. Procédé selon l'une des revendications précédentes, **caractérisé en ce que** l'accumulateur d'énergie (C) permet, à l'état chargé, l'activation de la couche fonctionnelle (FS1) électro-optique pendant une durée de 0,25 seconde ou plus.

7. Procédé selon l'une des revendications précédentes, **caractérisé en ce que** l'accumulateur d'énergie (C) permet, à l'état chargé, l'activation de la couche fonctionnelle (FS1) électro-optique pendant une durée de 1 seconde ou moins.

8. Agencement (1) présentant :
• un substrat (GS1),
• une couche fonctionnelle (FS1) électro-optique,
• un appareil de commande (ECU),
• dans lequel la couche fonctionnelle (FS1) est appliquée sur le substrat (GS1), et dans lequel les propriétés de transmission et/ou de réflexion de la couche fonctionnelle (FS1) électro-optique peuvent être modifiées par l'application d'un champ électrique,
• dans lequel l'appareil de commande (ECU) présente une entrée de tension d'alimentation (IN) et une sortie d'approvisionnement (OUT) ainsi que des moyens de mesure de tension (S) et un accumulateur d'énergie (C),
• dans lequel les moyens de mesure de tension (S) sont configurés pour mesurer (100) une tension (Vin) réellement disponible à l'entrée de tension d'alimentation (IN),
• dans lequel, lorsque (200) la tension (Vin) disponible est supérieure à une valeur de référence (Vref), l'appareil de commande (ECU) est configuré pour activer (300) la couche fonctionnelle (FS1) électro-optique avec une tension alternative (VAC) par l'intermédiaire de la sortie d'approvisionnement (OUT), dans lequel l'accumulateur d'énergie (C) est chargé au moins par sections,
• dans lequel, lorsque (200) la tension disponible (Vin) est inférieure ou égale à une valeur de référence (Vref), l'appareil de commande (ECU) est configuré pour activer (400) la couche fonctionnelle (FS1) électro-optique avec une tension continue (VDC) par l'intermédiaire de la sortie d'approvisionnement (OUT), dans lequel au moins une partie de l'énergie pour l'activation provient de l'accumulateur d'énergie (C),
• dans lequel la tension continue (VDC) est inférieure à la valeur de crête de la tension alternative (VAC).

9. Agencement selon la revendication 8, **caractérisé en ce que** la valeur prédéterminée (Vref) est inférieure au moins de moitié à une tension spécifiée (Vin).

10. Agencement selon la revendication 8 ou 9, **caractérisé en ce que** la fréquence de la tension alternative est supérieure ou égale à 25 Hz.

11. Agencement selon l'une des revendications précédentes 8 à 10, **caractérisé en ce que** la fréquence de la tension alternative est inférieure ou égale à 100 Hz.

12. Agencement selon l'une des revendications précédentes 8 à 11, **caractérisé en ce que** les moyens de mesure de tension (S) nécessitent moins d'une demi-période de la tension alternative pour la mesure (100).

13. Agencement selon l'une des revendications précédentes 8 à 12, **caractérisé en ce que** l'accumulateur d'énergie (C) permet, à l'état chargé, l'activation de la couche fonctionnelle (FS1) électro-optique pendant une durée de 0,25 seconde ou plus.

14. Agencement selon l'une des revendications précédentes 8 à 13, **caractérisé en ce que** l'accumulateur d'énergie (C) permet, à l'état chargé, l'activation de la couche fonctionnelle (FS1) électro-optique pendant une durée de 1 seconde ou moins.
